# EUROPÄISCHE PATENTANMELDUNG

(11) **EP 1 067 336 A1**
(43) Veröffentlichungstag der Anmeldung: **10.01.2001**
(21) Anmeldenummer: 00113913.8
(22) Anmeldetag: 30.06.2000
(51) Int. Cl.: F23J 13/00, F16L 7/00

(54) **Abstandshalter für ein Kamin-Rauchrohr**

(30) Priorität: 06.07.1999 DE 29911715 U
(71) Anmelder: ERLUS BAUSTOFFWERKE AG, 84088 Neufahrn (DE)
(72) Erfinder: Interwies, Jan, 84034 Landshut (DE)
(74) Vertreter: LOUIS, PÖHLAU, LOHRENTZ & SEGETH

(57) **Zusammenfassung**

Ein Abstandshalter (1) für das Rauchrohr eines Kamins, mit einem Band (2) das durch einen an den Bandenden angebrachten Verschluß (5) zu einer geschlossenen, im Benutzungszustand das Rauchrohr umschließenden Manschette schließbar ist. Von dem Band (2) stehen Federzungen (3) zur Anlage an der Innenwand des Kaminmantels ab. Das Band weist mindestens einen Schlitz auf, der eine aus der Bandfläche ausbiegbare Lasche (24) bildet. Die Lasche (24) ragt bezüglich der Manschette radial nach innen und gleicht dadurch toleranzbedingte Spiele zwischen den Abmessungen des Rauchrohrs und der Manschette aus.

## Beschreibung

Die Erfindung betrifft einen Abstandshalter mit den Merkmalen gemäß dem Oberbegriff des Anspruches 1.

Bei einem bekannten Abstandshalter dieser Art (DE 40 00 654 A1) ist als Verschluß an dem die Manschette bildenden Stahlband ein Schnellspannschloß vorgesehen. An der Bandfläche befestigte U-förmige Bügel mit Abwinkelungen greifen im gespannten Zustand des Bandes in Umfangsrillen zweier aufeinanderfolgender Rauchrohrabschnitte ein. Hierdurch dient die Manschette als Klemmring, der die benachbarten Rauchrohrabschnitte zusammenhält, und die in die Umfangsrillen eingreifenden Abwinkelungen der U-förmigen Bügel verhindern zugleich eine Verschiebung der Manschette.

Bei Rauchrohren, deren Rauchrohrabschnitte auf eine von der vorstehenden Verbindungsart abweichende Art miteinander verbunden sind, z. B. mittels Nut/Feder an ihren Stirnenden oder durch eine Muffenrohr-Steckverbindung, kommen Abstandshalter zum Einsatz, die allein durch einen Reibschluß der Manschette an dem Rauchrohr gehalten werden müssen. Das kann jedoch Schwierigkeiten bereiten, weil insbesondere bei keramischen Rauchrohrabschnitten Toleranzen der Querschnittsabmessungen von mehreren Millimetern auftreten können. Um diese zu beherrschen ist es schon bekannt, an beiden Enden des die Manschette bildenden Bandes zwei Abwinkelungen nach außen vorzusehen, die durch eine Schraubenverbindung gegeneinander verspannt werden können, bis die Manschette am Außenumfang des Rauchrohrabschnitts genügend fest anliegt. Die Herstellung solcher Abstandshalter ist aber relativ aufwendig im Hinblick darauf, daß Abstandshalter als Massenartikel möglichst billig sein müssen. Darüber hinaus ist die Art der Befestigung dieser Abstandshalter am Rauchrohr umständlich. Erleichtert man die Art der Befestigung dadurch, daß anstelle einer Schraubverbindung an den Bandenden ein Schnellspannschloß vorgesehen ist, so läßt sich dessen Funktion an die unterschiedlichen Querschnittstoleranzen nur dadurch anpassen, daß für den Eingriff des Bügels des Schnellspannschlosses mehrere Haken an dem gegenüberliegenden Bandende in Abständen voneinander vorgesehen sind. Da diese Haken einen Mindestabstand voneinander haben müssen, ist eine stufenlose Anpassung an Toleranzunterschiede nicht möglich; darüber hinaus wird die Herstellung des Abstandshalters dadurch verteuert.

Bei einem weiteren bekannten Abstandshalter (DE 298 06 952 U1) ist zur Herabsetzung der Herstellungskosten die Manschette als von vornherein geschlossener Haltering ausgebildet, der eine oder mehrere nach außen stehende, axial zum Haltering verlaufende Sicken aufweist. Der Haltering ist so bemessen, daß er auf die Umfangsfläche des Rauchrohrabschnitts axial aufgeschoben werden kann. Besteht zwischen der Umfangsfläche des Rauchrohrabschnitts und dem Haltering Spiel, so müssen eine oder mehrere Sicken mit einer Zange in Umfangsrichtung des Halterings soweit zusammengequetscht werden, bis letzterer fest auf der Umfangsfläche des Rauchrohrabschnitts sitzt.

Auch die Herstellung eines solchen geschlossenen Halterings, der an die Querschnittsform des Rauchrohrs (kreisrund oder quadratisch) angepaßt sein muß, verursacht einen kostenerhöhenden Aufwand. Darüber hinaus können diese Abstandshalter nur auf noch nicht zu einem Rauchrohr zusammengefügte Rauchrohrabschnitte aufgeschoben werden und können nicht noch nachträglich an schon bestehenden Rauchrohren befestigt werden. Hinzu kommt, daß das Zusammenquetschen der Sicken zum Anpassen der Abstandshalter an das Rauchrohr lästige Zusatzarbeit und ein Werkzeug hierzu erfordert.

Aufgabe der vorliegenden Erfindung ist es deshalb, einen Abstandshalter der eingangs angegebenen Art vorzuschlagen, dessen Herstellungskosten weiter verringert werden können und dessen Anbringung an dem Rauchrohr auf einfachere Art möglich ist.

Erfindungsgemäß wird dies erreicht durch die Ausgestaltung gemäß Anspruch 1.

Dadurch, daß das die Manschette bildende Band mindestens einen Schlitz, vorzugsweise mehrere solcher Schlitze, aufweist, die jeweils eine aus der Bandfläche heraus ausbiegbare Lasche bilden, ist die Herstellung sehr einfach. Denn bei vorzugsweise aus Stahlblech hergestellten Abstandshaltern können die die Laschen formenden Schlitze in einem Arbeitsgang mit der Ausbildung der Federzungen an dem Stahlband eingestanzt werden. Die Federzungen können einstückig mit dem Band aus Flachmaterial ausgestanzt oder durch Punktschweißen an dem Band befestigt werden. Als Verschluß an den Bandenden ist nach einer bevorzugten Ausführungsform ein Schnellspannschloß vorgesehen, das als handelsübliches Teil erhältlich ist und ebenfalls im gleichen Arbeitsgang an dem Band angepunktet werden kann. Auch der für den Eingriff des Bügels des Schnellspannschlosses vorgesehene Haken an dem gegenüberliegenden Bandende läßt sich in einem Zuge durch Einstanzen eines Schlitzes und Ausbiegen der dadurch geschaffenen Hakenlasche herstellen oder als handelsübliches Teil an dem Band befestigen, vorzugsweise durch Punktschweißen.

Die Länge des Bandes ist so bemessen, daß es an einem Rauchrohr mit der größten zu erwartenden Querschnittsabmessung mittels beispielsweise des Schnellspannschlosses festgelegt werden kann. In jedem Fall werden vor dem Anbringen des Bandes an dem Rauchrohr die durch jeweils einen Schlitz oder Schlitze begrenzten, zunächst in der Bandfläche liegenden Laschen von Hand aus der Bandfläche heraus zur Innenseite der Manschette gebogen. Das Herausbiegen erfolgt soweit, daß die Laschen durch Überwindung der Elastizitätsgrenze des Bandmaterials die Biegeverformung beibehalten. Wird in dieser Gestaltung der Abstandshalter an dem Rauchrohr durch Herumlegen des Bandes und Schließen des Verschlusses angelegt, so passen sich die nach innen ragenden federnden Laschen an das jeweils vorhandene Spiel zwischen der Außenfläche des Rauchrohrs und der Bandinnenfläche automatisch und stufenlos an, indem sie in Richtung auf ihre ursprüngliche unverformte Ausgangslage zurückgebogen werden. Aufgrund der federnden Anlage der Laschen an der Außenfläche des Rauchrohrs entsteht ein hinreichender Reibschluß, durch den die Manschette an dem Rauchrohr gehalten wird.

Zur Ausbildung der Laschen durch in das Band eingebrachte Schlitze bestehen vielfältige Möglichkeiten. So können im wesentlichen U-förmige Schlitze vorliegen, bei denen der U-Steg entweder gerade oder bogenförmig sein kann. Bei Wahl eines geraden Stegs entsteht eine viereckig konturierte Lasche mit Ecken, die zusätzlich zu dem Reibschluß durch Einhaken an Rauhigkeitsvorsprüngen des Rauchrohrs auch eine Art Formschluß ergeben. Die U-Stege der Schlitze können in Bandlängsrichtung oder quer dazu zeigen und alle bezüglich eines Bandendes oder einer Bandkante gleich gerichtet sein oder abwechselnd in die eine und andere Richtung zeigen. Nach einer anderen Ausführungsform kann jede Lasche durch zwei im Abstand voneinander quer zur Bandlängsrichtung verlaufende Schlitze erzeugt sein, die die Bandkante durchsetzen. In diesem Fall entsteht zwangsläufig - bei einem Band mit vorzugsweise zueinander parallelen geraden Kanten - jeweils eine in ihrer Kontur viereckige Lasche, die aus der Bandfläche nach innen ausgebogen werden kann.

Weitere Vorteile und Merkmale der Erfindung ergeben sich aus der nachfolgenden Beschreibung eines Ausführungsbeispiels anhand der beiliegenden Zeichnungen sowie aus weiteren Unteransprüchen. In den Zeichnungen zeigen:
Fig. 1 eine perspektivische Ansicht der Abstandshalter-Manschette nach der Erfindung im geschlossenen Zustand, und
Fig. 2 das zur Bildung der Manschette bestimmte Band in flachliegendem Zustand.

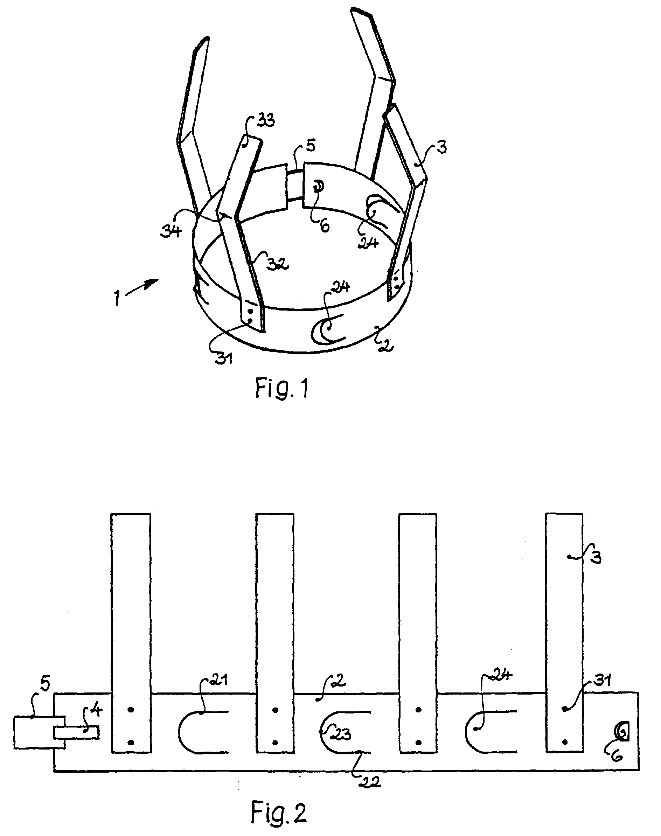

Der im ganzen mit 1 bezeichnete Abstandshalter gemäß Fig. 1 besteht im wesentlichen aus einem Stahlband 2 mit geraden und parallel zueinander verlaufenden Kanten, vier in gleichmäßigen Abständen auf der Bandlänge verteilten Federzungen 3 und einem an einem Bandende befestigten Schnellspannschloß 4, dessen Spannbügel 5 an einem Haken 6 des anderen Bandendes eingehängt werden kann. Die Federzungen 3 sind an dem Band 2 durch eine Punktschweißung 31 befestigt und weisen durch eine zweifache Abknickung jeweils zwei schräg zueinander verlaufende Abschnitte 32, 33 auf, deren Kante 34 zur federnden Anlage an der nicht gezeigten Innenwand eines Kamin-Mantelsteins bestimmt ist. Das Schnellspannschloß 4, das als handelsübliches Bauteil erhältlich ist, ist auf nicht näher gezeigte Art ebenfalls durch Schweißung an dem Band 2 befestigt.

In den drei Zwischenräumen zwischen den Federzungen 3 weist das Band 2 jeweils einen U-förmigen Schlitz 21 mit zwei zueinander parallelen, in Bandlängsrichtung verlaufenden Schlitzabschnitten 22 auf. Die Schlitzabschnitte 22 sind durch einen bogenförmigen Verbindungsabschnitt 23 miteinander verbunden. Der Verbindungsabschnitt 23 bildet den Steg eines U und weist in diesem Ausführungsbeispiel bei allen Schlitzen 21 zum selben Bandende. Jeder Schlitz 21 ist in das Band 2 eingestanzt und durchsetzt dieses; die dadurch gebildete Lasche 24 kann durch Eindrücken mit einem Finger oder mit einem Werkzeug bezüglich des ringförmig gebogenen Bandes gemäß Fig. 1 radial soweit nach innen gebogen werden, daß sie diese Biegeverformung beibehält. Hierzu hat das Stahlblechband 2 beispielsweise eine Blechdicke von 0,5 mm; die Federzungen 3 können stärker ausgebildet sein und beispielsweise eine Blechdicke von 0,7 mm haben.

Fig. 2 zeigt den erfindungsgemäßen Abstandshalter in dem Zustand unmittelbar nach der Herstellung. Das Band 2 und die Federzungen 3 liegen noch weitgehend in einer Ebene; lediglich der Verschlußhaken 6, der ebenfalls durch Stanzen in gleicher Weise wie die Schlitze 21 erzeugt ist, ist bereits aus der Bandfläche nach außen gebogen. Um den Abstandshalter an einem nicht gezeigten Rauchrohr anzubringen, werden die Federzungen 3 etwa in der aus Fig. 1 ersichtlichen Art nach einer Seite hin abgebogen oder abgewinkelt, wie dies der Abstand zwischen dem Rauchrohr und dem Mantelstein erfordert. Daraufhin werden die Laschen 24 in der geschilderten Weise aus der Bandfläche nach innen gebogen. In diesem Zustand kann das Band unter Ausbildung einer Manschette um das Rauchrohr herumgelegt und mittels des Schnellspannschlosses 4, dessen Bügel 5 in den Haken 6 eingehängt wird, verschlossen werden. Dabei kommen die nach innen gebogenen Laschen 24 an der Außenfläche des Rauchrohrs zur Anlage und werden mit dem Spannvorgang unter zunehmender Federvorspannung in Richtung auf ihre ursprüngliche Lage in der Bandfläche zurückgedrückt. Durch die federnde Anlage der Laschen 24 entsteht ein Reibschluß, der die durch das Band 2 gebildete Manschette und damit den Abstandshalter als Ganzes an der bestimmten Stelle des Rauchrohrs fixiert.

Im Rahmen der vorliegenden Erfindung kann von dem beschriebenen Ausführungsbeispiel abgewichen werden. So kann der eine Lasche 24 bildende Schlitz jeweils durchgehend bogenförmig verlaufen, so daß es einen einzigen gekrümmten Schlitzabschnitt gibt. Auch wenn geradlinige Schlitzabschnitte vorhanden sind, müssen diese nicht zueinander und auch nicht zur Bandlängsrichtung parallel verlaufen, sondern können in Richtung zu ihrem Verbindungsabschnitt konvergieren oder divergieren.

Auch die gewählte Form der Federzungen 3 kann beliebig geändert werden. So können diese anstelle der gezeigten abgewinkelten Form zu Ringen gestaltet sein, die mit einem Teil ihres Umfangs zur Anlage an der Innenwand des Kaminmantels bestimmt sind. Weiterhin können an dem Stahlband zusätzliche Befestigungselemente, z. B. Ringlaschen oder Ringe, befestigt sein. An diesen können die Enden von Seilen befestigt werden, die im Rahmen der Kaminsanierung zum Ablassen von Rauchrohren benützt werden, an denen Abstandshaltermanschetten bereits vorgesehen sind.

## Patentansprüche

1. Abstandshalter (1) für das Rauchrohr eines Kamins mit einem Band (2) das durch einen an den Bandenden angebrachten Verschluß (4,5) zu einer geschlossenen, im Benutzungszustand das Rauchrohr umschließenden Manschette schließbar ist, und mit von dem Band abstehenden Federzungen (3) zur Anlage an der Innenwand des Kaminmantels,
**dadurch gekennzeichnet,**
daß das Band (2) mindestens einen Schlitz (21) aufweist, der eine aus der Bandfläche ausbiegbare Lasche (24) bildet.

2. Abstandshalter nach Anspruch 1,
**dadurch gekennzeichnet,**
daß das Band mehrere auf seiner Länge verteilte Schlitze (21) aufweist.

3. Abstandshalter nach Anspruch 1 oder 2,
**dadurch gekennzeichnet,**
daß der Schlitz (21) zwei zueinander im Abstand verlaufende Abschnitte (22) hat, die an ihrem jeweils einen Ende durch einen dritten Abschnitt (23) zu einem U-förmigen Schlitz verbunden sind.

4. Abstandshalter nach Anspruch 3,
**dadurch gekennzeichnet,**
daß die Schlitzabschnitte (22) geradlinig sind und der Verbindungsabschnitt (23) bogenförmig ist.

5. Abstandshalter nach Anspruch 1 oder 2,
**dadurch gekennzeichnet,**
daß der Schlitz insgesamt bogenförmig ist.

6. Abstandshalter nach einem der Ansprüche 3 bis 5,
**dadurch gekennzeichnet,**
daß die U-förmigen bzw. bogenförmigen Schlitze mit dem U-Steg bzw. dem Bogenscheitel in Bandlängsrichtung und/oder quer zur Bandlängsrichtung weisen.

7. Abstandshalter nach Anspruch 6,
**dadurch gekennzeichnet,**
daß die U-förmigen oder bogenförmigen Schlitze mit dem U-Steg bzw. mit dem Bogenscheitel alle zu einem Bandende bzw. zu einer Bandkante weisen.

8. Abstandshalter nach Anspruch 6,
**dadurch gekennzeichnet,**
daß die U-förmigen bzw. bogenförmigen Schlitze mit dem U-Steg bzw. mit dem Bogenscheitel abwechselnd zu dem einen und dem anderen Bandende bzw. zu der einen und anderen Bandkante weisen.

9. Abstandshalter nach Anspruch 1 oder 2,
**dadurch gekennzeichnet,**
daß zur Bildung der ausbiegbaren Lasche zwei im Abstand voneinander quer zur Bandlängsrichtung verlaufende Schlitze vorgesehen sind, die die Bandkante durchsetzen.

10. Abstandshalter nach einem der Ansprüche 1 bis 9,
**dadurch gekennzeichnet,**
daß das Band ein Stahlband ist und der Schlitz eingestanzt ist.

11. Abstandshalter nach einem der Ansprüche 1 bis 10,
**dadurch gekennzeichnet,**
daß der Verschluß ein Schnellspannschloß (4,5) ist.

12. Abstandshalter nach Anspruch 11,
**dadurch gekennzeichnet,**
daß ein Bügel (5) des Schnellspannschlosses in einen aus dem Band (2) gestanzten und ausgebogenen Haken (6) einhängbar ist.
